(19) Europäisches Patentamt
European Patent Office
Office européen des brevets

(11) EP 1 746 466 B1

(12) # EUROPEAN PATENT SPECIFICATION

(45) Date of publication and mention of the grant of the patent:
**03.06.2009 Bulletin 2009/23**

(51) Int Cl.:
***G03G 15/04** (2006.01)* ***G02B 26/12** (2006.01)*
***G03G 15/32** (2006.01)*

(21) Application number: **06015246.9**

(22) Date of filing: **21.07.2006**

(54) **Optical writing device, optical writing method, and image forming apparatus**

Optische Schreibvorrichtung, optisches Schreibverfahren und Bilderzeugungsvorrichtung

Dispositif d'écriture optique, procédé d'écriture optique et appareil de formation d'images

(84) Designated Contracting States:
**DE ES FR GB IT NL**

(30) Priority: **21.07.2005 JP 2005211659**
**31.10.2005 JP 2005317019**

(43) Date of publication of application:
**24.01.2007 Bulletin 2007/04**

(73) Proprietor: **Ricoh Company, Ltd.**
**Tokyo 143-8555 (JP)**

(72) Inventor: **Kaima, Nobuyoshi**
**c/o Ricoh Company, Ltd.**
**Tokyo 143-8555 (JP)**

(74) Representative: **Schwabe - Sandmair - Marx**
**Patentanwälte**
**Stuntzstrasse 16**
**81677 München (DE)**

(56) References cited:
**JP-A- 5 096 778**
**JP-A- 5 204 230**
**JP-A- 6 098 104**
**JP-A- 2005 088 531**
**JP-A- 2005 208 071**
**US-A- 5 854 958**
**US-A1- 2001 028 387**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The following disclosure relates generally to a device, apparatus, method, system, computer program and product, each capable of controlling the intensity or duration of a light beam for image formation.

In a background image forming apparatus, an optical writing device is provided, which scans a light beam to form a plurality of light spots in the main scanning direction and in the sub-scanning direction to form a latent image on an image writing area of the optical writing device.

To improve image quality, the scanning process performed by the optical writing device may need to be controlled based on various image forming conditions, for example, including environmental or temporal factors, characteristics of the optical writing device or the image forming apparatus, or modes of operation. In one example, the intensity or duration of the light beam may be detected and used to adjust a start position of image recording as described in the US Patent No. 6847390, patented on January 25, 2005. In another example, the unevenness in density in the sub-scanning direction may be corrected using the light intensity of the light beams as described in the JP Patent Application Publication No. 2005-007697, published on January 13, 2005.

According to the US Patent No. 6847390 or the JP Patent Application Publication No. 2005-007697, the intensity or duration of the light beam irradiated to the image writing area is controlled using a detector, which detects the light beam entering a detection area, i.e., the outside of the image writing area of the optical writing device. Thus, to properly adjust the intensity or duration of the light beam in the image writing area, the light beam in the detection area needs to be detected with high accuracy by the detector.

JP 2005 208071 A describes an optical scanner. A printer control part sets up the light quantity for measurement between two points, and after setting up the specified light quantity, the measurement is started. A magnification error detection part compares the measured time difference with the reference time difference, calculates the error data and sends to the printer control part. The printer control part calculates the set frequency of pixel clock based on the sent multiplication error data, returns the light quantity of LD to the set value for image forming. Regarding the timing to return the light quantity of the LD to the set value for image forming, anytime after the measurement is allowed, and the next image forming operation is performed at the timing with no effect to the next operation. Therefore, the light quantity of light beam incident on each synchronism detection sensor becomes at least at the light beam detection time to the set specific light quantity.

JP 2005 088531 A describes an optical device. This optical writing device has a polygon mirror for deflecting to sweep a laser beam and a tip side synchronism sensor for detecting a tip portion of the laser beam. A reference position in one rotation of the polygon mirror is detected to be output to a scanning face selecting circuit as a polygon rotation reference position signal. A scanning magnification memory section stores a scanning magnification of the polygon mirror by each scanning face. A writing start position changing circuit changes a beam writing start position of each scanning face corresponding to the scanning magnification of the scanning face which is selected by the scanning face selecting circuit and read from the memory section, thereby preventing the fluctuation of the beam position.

JP 05 096778 A describes an image forming apparatus which is provided with an operation part 19 issuing an operation signal for adjusting a laser beam strength of a semiconductor laser and, furthermore, a control part conducting a control under which the laser beam strength is varied on the basis of the operation signal when a laser beam scans a photosensitive body (image area), the laser beam strength is kept constant when a laser beam scans a synchronizing signal generation means (non-image area) out of the image area, and the laser beam strength is varied in accordance with a resolution when the photosensitive body is scanned.

JP 05 204230 A describes an image forming apparatus which is provided with a liquid temperature sensor which detects the temperature of developer; an exposures scanner which controls the exposure intensity of a laser exposure means according to at least temperature or humidity of the ambient atmosphere of a drum detected by a temperature sensor and a humidity sensor; and the developer temperature control circuit which exerts control according to the temperature of the developer, detected by the liquid temperature sensor, so that the developer is maintained at the prescribed temperature. The exposure scanner corrects the value of the exposure intensity according to environmental data transferred from the temperature and humidity sensors, respectively, and the laser exposure means carries out exposure according to the corrected intensity of exposure. The developer temperature control circuit detects the temperature of the developer by means of the liquid temperature sensor and exerts control so that the developer is maintained at the present temperature.

SUMMARY OF THE INVENTION

The invention is defined by the subject-matter of the independent claims. The dependent claims are directed to advantageous embodiments.

ADVANTAGES OF THE INVENTION

The following disclosure describes advantageous examples of a device, apparatus, method, computer program and product, each capable of controlling the intensity or duration of the light beam in the detection area of the optical writing device.

In one advantageous example, the detection area includes a first detection area to which the light beam enters before it enters the image writing area. The light beam entering the first detection area of the optical writing device is caused to have a first fixed intensity, while the light beam entering the image writing area of the optical writing device is caused to have a varied intensity.

For example, an optical writing device may include a light source, a scanning device, a first detector, a timing controller, and a light source controller. The light source irradiates a light beam. The scanning device scans the light beam to a first detection area, an image writing area and a second detection area of the optical writing device. The first detector, which may be provided in the first detection area, outputs a first detection signal at a first timing when the first beam enters the first detection area. The timing controller outputs an image writing start signal at a second timing after the first timing. The light source controller causes the light source to irradiate the light beam having a first fixed intensity during a time period between the first timing and the second timing, and causes the light source to irradiate the light beam having a varied intensity after the second timing.

In another advantageous example, the detection area includes the first detection area, and a second detection area to which the light beam enters after it passes the image writing area. The light beam entering the first detection area of the optical writing device is caused to have the first fixed intensity. The light beam entering the image writing area of the optical writing device is caused to have the varied intensity. The light beam entering the second detection area of the optical writing device is caused to have a second fixed intensity.

For example, an advantageous optical writing device may include a light source, a scanning device, a first detector, a timing controller, a second detector, and a light source controller. The light source irradiates a light beam. The scanning device scans the light beam to a first detection area, an image writing area and a second detection area of the optical writing device. The first detector, which may be provided in the first detection area, outputs a first detection signal at a first timing when the first beam enters the first detection area. The second detector, which may be provided in the second detection area, outputs a second detection signal at a third timing when the light beam enters the second detection area. The timing controller outputs an image writing start signal at a second timing after the first timing. The light source controller causes the light source to irradiate the light beam having a first fixed intensity during a time period between the first timing and the second timing, causes the light source to irradiate the light beam having a varied intensity after the second timing, and causes the light source to irradiate the light beam having a second fixed intensity after the third timing.

A more complete appreciation of the disclosure and many of the attendant advantages thereof will be readily obtained as the same becomes better understood by reference to the following detailed description when considered in connection with the accompanying drawings, wherein:

FIG. 1 is a schematic block diagram illustrating the structure of an optical writing device according to an example embodiment of the present invention;
FIG. 2 is a cross-section diagram illustrating the structure of an image forming apparatus incorporating the optical writing device of FIG. 1 according to an example embodiment of the present invention;
FIG. 3 is a schematic block diagram illustrating the structure of a portion of the image forming apparatus of FIG. 2;
FIG. 4 is a schematic block diagram illustrating the structure of a laser diode (LD) controller of FIG. 1;
FIG. 5 is a timing chart illustrating operation of controlling the intensity of a light beam according to an example embodiment of the present invention;
FIG. 6 is a table illustrating the correspondence between a light beam intensity and an operation mode according to an example embodiment of the present invention;
FIG. 7 is a table illustrating the correspondence between a table identification number and a default value of a reference voltage according to an example embodiment of the present invention;
FIG. 8 is a timing chart illustrating operation of controlling the intensity of a light beam according to an example embodiment of the present invention;
FIG. 9 is a timing chart illustrating operation of controlling the intensity of a light beam when detecting a detection signal according to an example embodiment of the present invention;
FIG. 10 is a timing chart illustrating operation of controlling the intensity of a light beam according to an example embodiment of the present invention;
FIG. 11 is a timing chart illustrating operation of controlling the intensity of a light beam according to an example embodiment of the present invention;
FIG. 12 is a timing chart illustrating operation of obtaining a detection signal according to an example embodiment of the present invention;

FIG. 13 is a timing chart illustrating operation of obtaining a detection signal according to an example embodiment of the present invention; and

FIG. 14 is a cross-section diagram illustrating a portion of the structure of an image forming apparatus incorporating the optical writing device of FIG. 1 according to an example embodiment of the present invention.

DETAILED DESCRIPTION OF THE INVENTION

In describing the example embodiments illustrated in the drawings, specific terminology is employed for clarity. However, the disclosure of this patent specification is not intended to be limited to the specific terminology selected and it is to be understood that each specific element includes all technical equivalents that operate in a similar manner. Referring now to the drawings, wherein like reference numerals designate identical or corresponding parts throughout the several views, FIG. 1 illustrates an optical writing device 410 according to an example embodiment of the present invention.

The optical writing device 410 is capable of scanning a light beam onto a surface of an image carrier. In this example, the optical writing device 410 is incorporated in an image forming apparatus 1 shown in FIG. 2 to form a latent image on a photoconductor 421 of an image forming device 420.

Referring to FIG. 1, the optical writing device 410 includes a laser diode (LD) 101, a polygon mirror 102, a f-theta lens 103, a protector 104, a first reflective mirror 105a, a second reflective mirror 105b, a first detector 106a, a second detector 106b, a LD controller 107, a mirror controller 108, a data generator 110, a pixel clock generator 111, an adjuster 112, an image processor 113, and a timing controller 120. In this example, the timing controller 120, data generator 110, adjuster 112, pixel clock generator 111, image processor 113, and mirror controller 108 are collectively referred to as a writing controller 121.

In operation, the laser diode 101 irradiates a light beam onto a surface of the polygon mirror 102, which rotates in the clockwise direction under control of the mirror controller 108. With the rotation of the polygon mirror 102, the light beam is scanned in the main scanning direction (i.e., from left to right in FIG. 1) with a constant angular velocity, toward the f-theta lens 103. As the light beam passes the f-theta lens 103, the light beam is deflected so as to scan a surface of the photoconductor 421 with a constant scanning speed to form a plurality of light spots in the main scanning direction. As the photoconductor 421 rotates in the sub-scanning direction, the light beam is shifted downstream of the surface of the photoconductor 421 having the light spots thereon. In this example, the plurality of light spots is formed in an image writing area of the optical writing device 410, which is indicated by "Ri" in FIG. 1. The protector 104, which is located between the f-theta lens 103 and the photoconductor 421, protects the photoconductor 421 from a foreign matter, such as dust, to suppress degradation in the latent image.

Still referring to FIG. 1, the first reflective mirror 105a, second reflective mirror 105b, first detector 106a, and second detector 106b are each provided in a detection area of the optical writing device 410, which is outside of the image writing area Ri. Before reaching the image writing area Ri, the light beam, which is irradiated from the polygon mirror 102, is reflected from the first reflective mirror 105a toward the first detector 106a. Upon receiving the light beam, the first detector 106a outputs a start detection signal DETP1 to the writing controller 121. Similarly, after scanning through the image writing area Ri, the light beam is reflected from the second reflective mirror 105b toward the second detector 106b. Upon receiving the light beam, the second detector 106b outputs an end detection signal DETP2 to the writing controller 121.

Referring now to FIG. 2, an example structure and operation of the image forming apparatus 1 are explained. As illustrated in FIG. 2, the image forming apparatus 1 includes a printer 400, an image reader 500, an automatic document feeder (ADF) 550, a sheet storage 700, and a finisher 800.

The ADF 550 feeds an original document, which is placed on a document tray 551 toward an exposure glass 510 as indicated by an arrow shown in FIG. 2. The image reader 500, which is mounted on the printer 400, reads the original document, which may be fed by the ADF 550 or may be placed on the exposure glass 510, into image data using a photo-electric converter, for example, a charged coupled device (CCD). The image reader 500 stores the image data in a memory after applying various image processing to the image data using an image processing unit (IPU) 301 shown in FIG. 3. The sheet storage 700, which is located at one side of the printer 400, stores a large amount of recording sheets. The finisher 800, which is located at one side of the printer 400, includes a puncher 801, a stapler 803, output trays 804 and 805, and other devices.

The printer 400 includes the optical writing device 410, the image forming device 420, a fixing device 430, a sheet path switch device 440, sheet cassettes 450, a vertical sheet feeder 460, and a manual sheet tray 470. The optical writing device 410, which is shown in FIG. 1, irradiates a light beam according to the image data to form a latent image on the photoconductor 421. The image forming device 420 includes the photoconductor 421, a developer 422, a transfer device 423, a cleaning device 424, and other devices. The image forming device 420 develops the latent image formed on the photoconductor 421 into a toner image using toner supplied from the developer 422, and transfers the toner image onto a recording sheet carried by the transfer device 423. The recording sheet may be fed from the manual sheet tray 470 through registration rollers 461. Alternatively, the recording sheet may be fed from the sheet storage 700 or the sheet cassettes 450, through the vertical sheet feeder 460 and the registration rollers 461. The fixing device 430 fixes the toner image onto the recording sheet, while the recording sheet passes through a nip formed between two rollers of the fixing device 430. The sheet path switch device 440 may transfer the recording sheet, which is received from the fixing device 430, either toward the transfer device 423 or toward the finisher 800, using pawls 441 and 445. The recording sheet having the toner image thereon may be output onto the output tray 804 or 805.

Further, as illustrated in FIG. 3, the image forming apparatus 1 includes a controller 300, which controls operation of the image forming apparatus 1. Referring to FIG. 3, the controller 300 includes a central processing unit (CPU) 320, a random access memory (RAM) 322, a read only memory (ROM) 323, and an image memory 324, which are connected via a system bus 325. The controller of FIG. 3 is connected to other devices, for example, to the image reader 500, the IPU 301 or the optical writing device 410, through an interface 326. The CPU 320 may be implemented by any kind of processor. The RAM 322 may function as a work memory for the CPU 320. The ROM 323 may store various data, for example, a light controlling program of the present invention, or one or more tables that may be used by the CPU 320 for controlling the optical writing device 410. The image memory 324 stores image data, which may be read by the image reader 500.

In an example operation, as illustrated in FIG. 3, the image reader 500 reads the original document into image data, and applies various image processing to the image data using the IPU 301. The processed image data is stored in the image memory 324, for example, in a compressed format. When the CPU 320 receives an instruction for printing the image data, the CPU 320 reads out the image data from the image memory 324, decompresses the image data, and sends the decompressed image data to the writing controller 121 through the interface 326. The writing controller 121 generates an image data signal from the image data. The LD controller 107 drives the LD 101 to form a latent image on the photoconductor 421 according to the image data signal under control of the CPU 320. The latent image is developed into a toner image using the developer 422 of FIG. 2. The toner image is then transferred to a recording sheet. The recording sheet having the toner image thereon is transferred and output onto the output tray 804 or 805 of FIG. 2.

As described above, to improve image quality, the intensity or duration of the light beam to be irradiated from the LD 101 may need to be adjusted depending on various image forming conditions, including environmental factors such as temperature or humidity, temporal factors such as the usage amount of the photoconductor 421, characteristics of the optical writing device 410 such as the characteristics of the f-theta lens 103 or the fluctuations in rotation of the polygon mirror 102, etc.

In one example, referring to FIG. 1, the number of light spots or position of light spots formed on the image writing area Ri may be adjusted using the adjuster 112 and the pixel clock generator 111. For example, the adjuster 112 counts a scan time period Nc using the start detection signal DETP 1 and the end detection signal DETP2, and compares the counted scan time period Nc with a reference scan time period No to generate phase data that indicates the number or position of light spots to be adjusted. The pixel clock generator 111 adjusts a pixel clock signal PCLK based on the phase data, and outputs the adjusted pixel clock signal PCLK.

In another example, the adjuster 112 counts a scan time period Nc using the start detection signal DETP1 and the end detection signal DETP2, and compares the counted scan time period Nc with a reference scan time period No to generate a difference scan time period, for example, No/Nc. The adjuster 112 outputs the difference scan time period No/Nc to the pixel clock generator 111. In this example, the reference scan time period No may be obtained at a predetermined timing, for example, at the timing when the image forming apparatus 1 is shipped, and stored in the ROM 323. The pixel clock generator 111 outputs a pixel clock signal PCLK, which is synchronized with the detection signal DETP1 or DETP2. For example, the pixel clock generator 111 may obtain a frequency Fp of the pixel clock signal PCLK, by multiplying the difference scan time period No/Nc with a reference frequency Fr of the pixel clock signal PCLK. The pixel clock generator 111 outputs the pixel clock signal PCLK having the obtained frequency Fp. In this example, the reference frequency Fr may be obtained from a reference clock generator, which may be provided in the pixel clock generator 111. Alternatively, the reference frequency Fr may correspond to the frequency of the pixel clock signal PCLK when the start detection signal DETP1 or the end detection signal DETP2 is output. In this example, the counted scan time period Nc may be obtained as a difference between the start detection signal DETP1 and the end detection signal DETP2, preferably, at a predetermined timing described below referring to FIGS. 12 and 13.

As described above, the number or position of the light spots in the main scanning direction may be properly adjusted using the start detection signal DETP1 or the end detection signal DETP2 for improved image quality.

Referring back to FIG. 1, the timing controller 120 may be provided with a counter, which counts a timing period in the main scanning direction or in the sub-scanning direction. For example, to control a timing for starting image writing, the timing controller 120 counts a time period from the timing when the start detection signal DETP1 is output from the first detector 106a, and outputs an image writing start signal to the data generator 110 and the pixel clock generator 111 when the counted time period reaches a reference time period. The reference time period is previously set so as to correspond to a timing when the light beam enters the image writing area Ri.

The image processor 113 outputs an image data signal, which corresponds to the image data obtained from the image memory 324 of FIG. 3, in synchronization with the pixel clock signal PCLK received from the pixel clock generator 111. The data generator 110 modulates the image data signal using the pixel clock signal PCLK to generate a modulated image data signal VDATA, and outputs the modulated image data signal VDATA at a timing determined by the image writing start signal to the LD controller 107. The LD controller 107 controls the duration of the light beam, by turning on or off the LD 101 according to the modulated image data signal VDATA received from the data generator 110. Further, the LD controller 107 controls the intensity of the light beam of the LD 101 under control of the CPU 320.

As illustrated in FIG. 4, the LD controller 107 includes a digital analog converter (DAC) 200 and an LD driver 201. The LD driver 201 turns on or off the LD 101 according to the modulated image data signal VDATA, which is received from the data generator 110 of the writing controller 121. The LD driver 201 causes the LD 101 to irradiate the light beam having a light intensity L, which is determined by a reference voltage Vref output from the DAC 200. In this example, the DAC 200 converts the reference voltage Vref, which is set by the CPU 320, from digital to analog.

As illustrated in FIG. 5, the CPU 320 sets a fixed level of the reference voltage Vref when the light beam irradiates the detection area of the optical writing device 410. The CPU 320 sets a varied level of the reference voltage Vref when the light beam irradiates the image writing area of the optical writing device 410. In this example, the first detection area R0 corresponds to a detection area where the first detector 106a is provided, which outputs the start detection signal DETP1. The second detection area R2 corresponds to a detection area where the second detector 106b is provided, which outputs the end detection signal DETP2. The image writing area in which the latent image is formed according to the modulated image data signal VDATA is indicated by R1. Information indicating the area to which the light beam currently irradiates may be obtained from the timing controller 120 of the writing controller 121. Further, as illustrated in FIG. 5, the light intensity L of the LD 101 increases proportionally to the level of the reference voltage Vref.

Still referring to FIG. 5, an example operation of controlling the intensity of the light beam, performed by the CPU 320, is explained. In this example, the default value of the reference voltage Vref is previously set depending on the characteristics of the optical writing device 410. For example, the default value of the reference voltage Vref may be set according to the resistance value at the timing when the image forming apparatus 1 is shipped. Further, the default value of a scanning speed S is previously set depending on the characteristics of the optical writing device 410. When the CPU 320 performs the scanning operation with the default value of the reference voltage Vref and the default value of the scanning speed S, the LD driver 201 causes the LD 101 to output the default value of the light intensity L. For example, if the default value of the reference voltage Vref is set to 128 decimal (dec), the LD 101 outputs the default value of the light intensity L, which is 0.128 mW.

The light intensity L may be adjusted depending on the area to which the light beam L currently irradiates.

When the light beam L irradiates the image writing area R1, the value of the reference voltage Vref is adjusted using the ratio of the actual value of the scanning speed S relative to the default value of the scanning speed S, as described in the following equation:

Vref1 = Vrefd * Sa/Sd, wherein Vref1 corresponds to the adjusted value of the reference voltage Vref for the image writing area R1, Vrefd corresponds to the default value of the reference voltage Vref, Sa corresponds to the actual value of the scanning speed S, and Sd corresponds to the default value of the scanning speed S. In this example, the actual value of the scanning speed S may be obtained by the CPU 320 based on the start and end detection signals DETP1 and DETP2. The value of the reference voltage Vref may be expressed in the digital format, for example, in decimal (dec) or hexadecimal (h). The value of the scanning speed S may be expressed in mm/s.

If the default value Vrefd of the reference voltage Vref is set to 128 dec, the above-described equation may be expressed as:

$$Vref1 = 128\ (dec) * Sa\ (mm/s)\ /Sd\ (mm/s).$$

Since the default value of the light intensity L is set to 0.128 mW, and the light intensity L increases proportionally to the reference voltage Vref, the value of the light intensity L for the image writing area R1 may be obtained using the following equation:

$$L1 = 0.128\ (mW) * Sa/Sd.$$

Accordingly, the intensity of the light beam for the image writing area R1 varies depending on the actual scanning speed S, i.e., the counted scan time period obtained from the start detection signal DETP1 and the end detection signal DETP2.

When the light beam L irradiates the first detection area R0, the value of the reference voltage Vref is adjusted based on a first fixed value X as described in the following equation:

Vref0 = Vrefd * X, wherein Vref0 corresponds to the adjusted value of the reference voltage Vref for the first detection area R0. In this example, the first fixed value X is previously set depending on the characteristics of the optical writing device 410. If the default value Vrefd of the reference voltage Vref is set to 128 dec, and the first fixed value X is set to 1.2, the above-described equation may be expressed as:

$$Vref0 = 128\ (dec) * 1.2.$$

Since the default value of the light intensity L is set to 0.128 mW, and the light intensity L increases proportionally to the reference voltage Vref, the value of the light intensity L for the first detection area R0 may be obtained using the following equation:

$$L0 = 0.128\ (mW) * 1.2.$$

Accordingly, the intensity of the light beam for the first detection area R0 is fixed, which may increase the detection accuracy of the start detection signal DETP1.

When the light beam L irradiates the second detection area R2, the value of the reference voltage Vref is adjusted based on a second fixed value Y as described in the following equation:

Vref2 = Vrefd * Y, wherein Vref2 corresponds to the adjusted value of the reference voltage Vref for the second detection area R2. In this example, the second fixed value Y is previously set depending on the characteristics of the optical writing device 410. If the default value Vrefd of the reference voltage Vref is set to 128 dec, and the second fixed value Y is set to 1.2, the above-described equation may be expressed as:

$$Vref2 = 128\ (dec) * 1.2.$$

Since the default value of the light intensity L is set to 0.128 mW, and the light intensity L increases proportionally to the reference voltage Vref, the value of the light intensity L for the second detection area R2 may be obtained using the following equation:

$$L2 = 0.128\ (mW) * 1.2.$$

Accordingly, the intensity of the light beam for the second detection area R2 is fixed, which may increase the detection accuracy of the end detection signal DETP2. As described above, in order to further increase the detection accuracy, the first fixed value X and the second fixed value Y may be set equal. However, the optical characteristics of the first detector 106a and the second detector 106b may need to be considered.

Referring now to FIG. 6, an example operation of controlling the intensity of the light beam, performed by the CPU 320, is explained. In this example, the ROM 323 of FIG. 3 stores a set table shown in FIG. 6, which stores a set of values including the light intensity values L0, L1, and L2, and the reference voltage values Vref0, Vref1, and Vref2, for each of operation modes A, B, C, and D. The CPU 320 may select one of the operation modes A, B, C, and D depending on various image forming conditions, for example, a desired scanning speed, or the characteristics of the photoconductor 421 that may change over time. Alternatively, the CPU 320 may select one of the operation modes A, B, C, and D according to the user preference, which may be input, for example, through an operation control panel that may be provided in the image forming apparatus 1.

As illustrated in FIG. 6, the light intensity L1 for the image writing area R1 varies depending on the operation mode, while the light intensity L0 or L2 for the detection area R0 or R2 remains constant. For example, if the operation mode is changed from the mode B to the mode C, the CPU 320 changes the reference voltage value Vref1 from 80 h to 70 h, which causes the light intensity L1 to change from 0.128 mW to 0.112 mW, when the light beam is irradiated to the image writing area R1. When the light beam is irradiated to the detection area R0 or R2, the reference voltage value Vref remains constant. For example, the reference voltage value Vref0 or Vref2 may be set to be equal to a default value Vrefd, which differs depending on the characteristics of the optical writing device 410.

In this example, the ROM 323 of FIG. 3 may store a plurality of set tables, each set table storing a set of light intensity values and reference voltage values for a specific default value of the reference voltage. Each set table is assigned with a table identification number, for example, 0, 1, 2, etc. In addition, the ROM 323 of FIG. 3 may store a table shown in FIG. 7, which lists the table identification number and the default reference voltage value in a corresponding manner. For example, if the CPU 320 sets the default value of the reference voltage Vref to be 90 h, the set table assigned with the table identification number of 5 is selected using the table shown in FIG. 7. Using information stored in the set table having the table identification number of 5, the CPU 320 may control the light intensity L of the LD 101.

Referring to FIG. 5, the CPU 320 classifies the area to which the light beam is irradiated into three areas R0, R1, and R2 in the main scanning direction. However, the area to which the light beam is irradiated may be classified into more than three areas in the main scanning direction.

Referring now to FIG. 8, an example operation of controlling the intensity of the light beam, performed by the CPU 320, is explained. In this example, the CPU 320 sets a fixed level of the reference voltage Vref when the light beam irradiates the first detection area R0, which corresponds to a detection area where the first detector 106a for outputting the start detection signal DETP 1 is provided. The CPU 320 sets a varied level of the reference voltage Vref when the light beam irradiates the image writing area R1, R2, R3, R4, or R5. The CPU 320 continues to set a varied level of the reference voltage Vref when the light beam irradiates the area R6, which includes the end portion of the image writing area and the second detection area where the second detector 106b for outputting the end detection signal DETP 2 is provided. For example, when the light beam is irradiated to the areas R1, R2, R3, R4, R5, or R6, the CPU 320 causes the LD controller 107 to perform shading correction. When the shading correction is performed, the intensity of the light beam is adjusted depending on the optical characteristics of the optical writing device 410, for example, by changing the value of the reference voltage Vref. As shown in FIG. 8, the intensity of the light beam changes proportionally to the value of the reference voltage Vref.

Referring to FIG. 8, since the intensity of the light beam for the detection area R0 is fixed, the detection accuracy of the start detection signal DETP 1 may increase. In addition to the increased detection accuracy in the start detection signal DETP1, the detection accuracy of the end detection signal DETP2 may increase by turning off the shading correction function at the time of detecting the end detection signal DETP2.

For example, as illustrated in FIG. 9, when the timing controller 120 of FIG. 1 indicates that the light beam enters the area R6 of FIG. 8, the CPU 320 causes the LD controller 107 to turn off the shading correction function, and sets the reference voltage Vref to be equal to the value of the reference voltage Vref for the first detection area R0. In this example, the reference voltage Vref is set to 1 V. The light intensity L of 0.2 mW is irradiated to the LD 101 toward the rear end of the image writing area and the second detection area. When the light beam irradiates the second detector 106b, the second detector 106b outputs the end detection signal DETP 2 to the writing controller 121. Since the start detection signal DETP1 and the end detection signal DETP2 are detected using the same light intensity L as illustrated in FIG. 10, the scan time period, which is the difference between the start and end detection signals DETP1 and DETP2, may be obtained with high accuracy.

Referring now to FIG. 11, an example operation of controlling the intensity of the light beam, performed by the CPU 320, is explained. In this example, when the light beam irradiates the first detection area R0, the CPU 320 sets a first fixed level of the reference voltage Vref depending on the optical characteristics of the first detector 106a. The CPU 320 sets a varied level of the reference voltage Vref when the light beam irradiates the image writing area R1, R2, R3, R4, R5, or R6. When the light beam irradiates the second detection area R7 where the second detector 106b for outputting the end detection signal DETP2 is provided, the CPU 320 sets a second fixed level of the reference voltage Vref depending on the optical characteristics of the second detector 106b. In this manner, the fixed level of the reference voltage Vref may be properly set for each of the detectors, depending on the characteristics of the detector, such as its sensitivity.

For any one of the above-described examples, the counted scan time period may be obtained at a predetermined timing. The predetermined timing may be set to a timing before the image forming apparatus 1 performs image formation, a timing after the image forming apparatus 1 is instructed to perform image formation, a timing after the image forming apparatus 1 completes initial setting for image formation, or a timing occurred after the image forming apparatus 1 performs image formation on a preceding recording sheet or before the image forming apparatus 1 performs image formation on a following recording sheet. After the counted scan time period is obtained, the image forming apparatus 1 may perform image processing, such as magnification correction, based on the obtained scan time period. In this manner, the resultant image quality may increase.

Referring now to FIGS. 12 and 13, example operations of obtaining a counted scan time period from the start and end detection signals DETP1 and DETP2 are explained. In this example, the counted scan time period is obtained for a color image forming apparatus including optical writing devices 41Y, 41C, 41M, and 41K, shown in FIG. 14. The color image forming apparatus of FIG. 14 is substantially similar in structure to the image forming apparatus 1 of FIG. 2. The differences include the replacement of the optical writing device 410 with the optical writing devices 41Y, 41C, 41M, and 41K, the replacement of the image forming device 420 with image forming devices 42Y, 42C, 42M, and 42K, and the addition of a pattern detector 60. The optical writing devices 41Y, 41C, 41M, and 41K each have the structure shown in FIG. 1. In this example, Y, C, M, and K respectively correspond to the yellow color, cyan color, the magenta color, and black color. The optical writing device 41 Y forms a latent image for the yellow color on a photoconductor 42K of the image forming device 40K. The optical writing device 41C forms a latent image for the cyan color on a photoconductor 42C of the image forming device 40C. The optical wiring device 41M forms a latent image for the magenta color on a photoconductor 42M of the image forming device 40M. The optical writing device 42K forms a latent image for the black color on a photoconductor 42K of the image forming device 40K.

In one example, referring to FIG. 12, upon receiving an instruction for starting image formation from the CPU 320, the timing controller 120 of each of the optical writing devices 41Y, 41C, 41M, and 41K outputs an image writing start signal for each of the colors K, C, M, and Y to the LD controller 107. As shown in FIG. 12, the timing controller 120 of the optical writing device 41Y outputs the image start writing signal XPFGATE_Y to cause the LD 101 to form a latent image for the yellow color. The timing controller 120 of the optical writing device 41C outputs the image start writing signal XPFGATE_C to cause the LD 101 to form a latent image for the cyan color. The timing controller 120 of the optical writing device 41M outputs the image start writing signal XPFGATE_M to cause the LD 101 to form a latent image for the magenta color. The timing controller 120 of the optical writing device 41K outputs the image writing start signal XPFGATE_K to cause the LD 101 to form a latent image for the black color.

The CPU 320 instructs the adjuster 112 of each of the optical writing devices 41Y, 41C, 41M, and 41K to obtain the counted scan time period for each of the colors at a timing determined by each of the image writing start signals. As illustrated in FIG. 12, the adjuster 112 of the optical writing device 41Y obtains the scan time period for the yellow color, using the start detection signal DETP1 and the end detection signal DETP2 at a timing indicated by CONT_Y. The adjuster 112 of the optical writing device 41C obtains the scan time period for the cyan color, using the start detection signal DETP1 and the end detection signal DETP2 at a timing indicated by CONT_C. The adjuster 112 of the optical writing device 41M obtains the scan time period for the magenta color, using the start detection signal DETP1 and the end detection signal DETP2 at a timing indicated by CONT_M. The adjuster 112 of the optical writing device 41K obtains the scan time period for the black color, using the start detection signal DETP1 and the end detection signal DETP2 at a timing indicated by CONT_K.

In another example, referring to FIG. 13, upon receiving an instruction for starting image formation from the CPU 320, the timing controller 120 of each of the optical writing devices 41Y, 41C, 41M, and 41K outputs an image writing start signal for each of the colors Y, C, M, and K to the LD controller 107. The LD controller 107 outputs a modulated image data signal for each of the colors Y, C, M, and K to cause the LD 101 to form a latent image for each of the colors Y, C, M, and K. As shown in FIG. 13, the timing controller 120 of the optical writing device 41Y outputs the image start writing signal XPFGATE_Y. At the substantially same timing, the LD controller 107 outputs the image data signal DATA_Y. The timing controller 120 of the optical writing device 41C outputs the image start writing signal XPFGATE_C. At the substantially same timing, the LD controller 107 outputs the image data signal DATA_C. The timing controller 120 of the optical writing device 41M outputs the image start writing signal XPFGATE_M. At the substantially same timing, the LD controller 107 outputs the image data signal DATA_M. The timing controller 120 of the optical writing device 41K outputs the image start writing signal XPFGATE_K. At the substantially same timing, the LD controller 107 outputs the image data signal DATA_K. In this example, after the timing when the image start writing signal XPFGATE_K is output, the LD controller 107 of each of the optical writing devices 41Y, 41C, 41M, and 41K outputs a pattern signal (indicated by "M" in FIG. 13) to form a pattern on the surface of a transfer belt of the transfer device 423 (FIG. 14). Each of the patterns is detected by the pattern detector 60, and is used to adjust the position of the light spots in the main scanning direction. After the adjustment, the CPU 320 instructs the adjuster 112 of each of the optical writing devices 41Y, 41C, 41M, and 41K to obtain the counted scan time period for each of the colors.

Numerous additional modifications and variations are possible in light of the above teachings. It is therefore to be understood that within the scope of the appended claims, the disclosure of this patent specification may be practiced in ways other than those specifically described herein.

For example, elements and/or features of different illustrative embodiments may be combined with each other and/or substituted for each other within the scope of this disclosure and appended claims.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, involatile memory cards, ROM (read-only-memory), etc.

Alternatively, any one of the above-described and other methods of the present invention may be implemented by ASIC, prepared by interconnecting an appropriate network of conventional component circuits or by a combination thereof with one or more conventional general purpose microprocessors and/or signal processors programmed accordingly.

## Claims

1. An image forming apparatus (1), comprising:

   an image carrier (421; 42K, 42M, 42C, 42Y);
   an image reader (500) configured to read an original document into image data;
   an optical writing device (410; 41K, 41M, 41C, 41Y) configured to form a latent image on an image writing area (Ri; R1 of FIG. 5; R1, R2, R3, R4, R5 of FIG. 8 or 10; R1, R2, R3, R4, R5, R6 of FIG. 11) of the image carrier (421; 42K, 42M, 42C, 42Y) according to the image data by irradiating and scanning a light beam, wherein the optical writing device comprises:

      means (101, 102, 103) for irradiating and scanning the light beam to a first detection area (R0), the image writing area, and a second detection area (R2 of FIG. 5, R6 of FIG. 8 or 10, R7 of FIG. 11) of the image carrier (421; 42K, 42M, 42C, 42Y);
      first means (105a, 106a) for detecting the light beam to generate a first detection result (DETP1) used for determining to which of the first detection area (R0) and the image writing area of the image carrier (421; 42K, 42M, 42Y) the light beam irradiates, wherein the first means (105a, 106a) for detecting the light beam is provided at one side outside of the image writing area (Ri; R1 of FIG. 5; R1, R2, R3, R4, R5 of FIG. 8 or 10; R1, R2, R3, R4, R5, R6 of FIG. 11); and
      means (121, 107) for controlling an intensity (L) of the light beam; and

   a controller (320) configured to set the intensity (L) of the light beam to be a first fixed intensity (L0) for the first detection area (R0) when the light beam irradiates the first detection area (R0), and to set the intensity (L) of the light beam to be a varied intensity (L1) for the image writing area (Ri; R1 of FIG 5; R1, R2, R3, R4, R5 of FIG. 8 or 10; R1, R2, R3, R4, R5, R6 of FIG. 11) which is indicated by an image writing start signal outputted at a timing counted from the first detection result (DETP1) outputted when the light beam irradiates the first means (105a, 106a) for detecting the light beam;
   wherein the varied intensity (L1) of the light beam is set depending on various image forming conditions;

   the optical writing device (410; 41K, 41M, 41C, 41Y) further comprises:

   second means (105b, 106b) for detecting the light beam to generate a second detection result (DETP2) used for determining whether the light beam irradiates a second detection area (R2 of FIG. 5, R6 of FIG. 8 or 10, R7 of FIG. 11) of the image carrier (421; 42K, 42M, 42C, 42Y), wherein the second means (105b, 106b) for detecting the light beam is provided at the other side outside of the image writing area (Ri; R1 of FIG 5; R1, R2, R3, R4, R5 of FIG. 8 or 10; R1, R2, R3, R4, R5, R6 of FIG 11);
   the controller (320) is further configured to control the intensity (L) of the light beam to be a second fixed intensity (L2) for the second detection area (R2 of FIG. 5, R6 of FIG. 8 or 10, R7 of FIG 11) when the light beam irradiates the second detection area (R2 of FIG. 5, R6 of FIG. 8 or 10, R7 of FIG. 11);
   **characterized in that**:

      the optical writing device (410; 41K, 41M, 41C, 41Y) is further configured to count a time period from a first timing when the light beam enters the first detection area (R0) to a third timing when the light beam enters the second detection area (R2 of FIG 5, R6 of FIG. 8 or 10, R7 of FIG. 11) to obtain a counted time period, and the controller (320) is further configured to calculate the varied intensity (L1) of the light beam using an actual scanning speed (Sa) obtained from the counted time period.

2. The apparatus (1) of claim 1, wherein the first fixed intensity (L0), the varied intensity (L1), and the second fixed intensity (L2) are stored in a table for different operation modes (A to D),
   wherein the controller (320) is further configured to select one of the operation modes (A to D) depending on the various image forming conditions, and
   wherein the intensity (L) of the light beam for the image writing is set to the varied intensity (L1) with respect to the selected operation mode.

3. The apparatus (1) of claim 1 or 2, wherein the means (121, 107) for controlling of the optical writing device (410; 41K, 41M, 41C, 41Y) further comprises:

   means (201) for driving a light source (101) of the means (101, 102, 103) for irradiating and scanning using a reference voltage (Vref), wherein the varied intensity (L1) of the light beam for the image writing area (Ri; R1 of FIG. 5; R1, R2, R3, R4, R5 of FIG. 8 or 10; R1, R2, R3, R4, R5, R6 of FIG. 11) is set proportionally to the reference voltage (Vref).

**4.** The apparatus (1) of any one of claims 1 to 3, wherein the first fixed intensity (L0) and the second fixed intensity (L2) are substantially equal to each other.

**5.** The apparatus (1) of claim 1, further comprising:

means (112) for obtaining a difference value using the counted time period counted between the first timing and the third timing based on the first detection result (DETP1) and the second detection result (DETP2); and
means (111) for generating an adjusted clock signal using the difference value,
wherein the light beam is irradiated in synchronization with the adjusted clock signal.

**6.** The apparatus (1) of any one of claims 1 to 6, wherein the first fixed intensity (L0) is determined based on optical characteristics of a first detector (106a) of the first means (105a, 106a) for detecting the light beam, and the second fixed intensity (L2) is determined based on optical characteristics of a second detector (106b) of the second means (106a, 106b) for detecting the light beam.

**7.** The apparatus (1) of claim 5, wherein the controller (320) is configured to start applying shading correction after a second timing when the light beam enters the image writing area (Ri; R1 of FIG. 5; R1, R2, R3, R4, R5 of FIG. 8 or 10; R1, R2, R3, R4, R5, R6 of FIG. 11).

**8.** The apparatus (1) of claim 7, wherein the controller (320) is configured to stop applying the shading correction before the third timing.

**9.** The apparatus (1) of claim 1 or 5, wherein the counted time period is obtained after the controller instructs the optical writing device (410; 41K, 41M, 41C, 41Y) to start an image writing operation.

**10.** The apparatus (1) of claim 1, 5 or 9, wherein the controller (320) is further configured to perform magnification correction using the counted time period.

**11.** A method for controlling an optical writing device (410; 41K, 41M, 41C, 41Y), which irradiates a light beam, the method comprising:

detecting an area to which the light beam irradiates, the area comprising a first detection area (R0), an image writing area (Ri; R1 of FIG. 5; R1, R2, R3, R4, R5 of FIG. 8 or 10; R1, R2, R3, R4, R5, R6 of FIG. 11), and a second detection area (R2 of FIG. 5, R6 of FIG. 8 or 10, R7 of FIG. 11) to generate first and second detection results (DETP 1, DETP2) ; and
driving the optical writing device (410; 41K, 41M, 41C, 41Y) with a reference voltage (Vref) to control an intensity of the light beam, wherein the reference voltage (Vref) is set to be a first fixed value (Vref0) for the first detection area (R0) when the light beam irradiates the first detection area (R0), to be a varied value (Vref1) for the image writing area (Ri; R1 of FIG 5; R1, R2, R3, R4, R5 of FIG 8 or 10; R1, R2, R3, R4, R5, R6 of FIG. 11) when an image writing start signal is outputted at a timing counted from the first detection result (DETP1) outputted when the light beam irradiates a first detecting means (105a, 106a) for detecting the lightbeam, wherein the first detecting means (105a, 106a) for detecting the light beam is provided at one side outside of the image writing area (Ri; R1 of FIG 5; R1, R2, R3, R4, R5 of FIG 8 or 10; R1, R2, R3, R4, R5, R6 of FIG 11), and to be a second fixed value (Vref2) for the second detection area (R2 of FIG. 5, R6 of FIG. 8 or 10, R7 of FIG. 11) when the light beam irradiates the second detection area (R2 of FIG. 5, R6 of FIG. 8 or 10, R7 of FIG. 11),
wherein a second detecting means (105b, 106b) for detecting the light beam outputs the second detection result (DEPT2) when the light beam irradiates the second detecting means (105b, 106b) for detecting the light beam, and wherein the second detecting means (105b, 106b) is provided at the other side outside of the image writing area (Ri; R1 of FIG. 5; R1, R2, R3, R4, R5 of FIG 8 or 10; R1, R2, R3, R4, R5, R6 of FIG. 11);
wherein the varied value (Vref1) of the reference voltage (Vref) is set depending on various image forming conditions;
**characterized in that:**

the method further comprises the following steps:

counting a time period from a first timing when the first detection result (DETP1) is outputted to a third timing when the second detection result (DETP2) is outputted to obtain an actual scanning speed (Sa), wherein the varied value (Vref1) of the reference voltage (Vref) is calculated using the actual scanning speed (Sa).

**12.** The method of claim 11, further comprising:

storing at least one of the first fixed value (Vref0), the varied value (Vref1), and the second fixed value (Vref2) in a table for difference operation modes (A to D); and
selecting one of the operation modes (A to D) depending on the various image forming conditions,
wherein the value of the reference voltage (Vref) is set to the varied value (Vref1) with respect to the selected operation mode.

## Patentansprüche

**1.** Bilderzeugungsapparat (1), der Folgendes umfasst:

einen Bildträger (421; 42K, 42M, 42C, 42Y);
ein Bildlesegerät (500), konfiguriert, um ein Originaldokument in Bilddaten zu lesen;
eine optische Schreibvorrichtung (410; 41K, 41M, 41C, 41Y), konfiguriert, um ein latentes Bild auf einer Bildschreibfläche (Ri; R1 von Fig. 5; R1, R2, R3, R4, R5 von Fig. 8 oder 10; R1, R2, R3, R4, R5, R6 von Fig. 11) des Bildträgers (421; 42K, 42M, 42C, 42Y) entsprechend der Bilddaten durch Bestrahlen und Abtasten eines Lichtstrahls auszubilden, wobei die optische Schreibvorrichtung Folgendes umfasst:

Mittel (101, 102, 103) zum Bestrahlen und Abtasten des Lichtstrahls auf einer ersten Detektionsfläche (R0), der Bildschreibfläche, und einer zweiten Detektionsfläche (R2 von Fig. 5, R6 von Fig. 8 oder 10, R7 von Fig. 11) des Bildträgers (421; 42K, 42M, 42C, 42Y);
erstes Mittel (105a, 106a) zum Detektieren des Lichtstrahls, um ein erstes Detektionsergebnis (DETP1) zu erzeugen, das verwendet wird, um zu bestimmen, auf welche der ersten Detektionsfläche (R0) oder der Bildschreibfläche des Bildträgers (421; 42K, 42M, 42C, 42Y) der Lichtstrahl bestrahlt, wobei das erste Mittel (105a, 106a) zum Detektieren des Lichtstrahls an einer Seite außerhalb der Bildschreibfläche (Ri; R1 von Fig. 5; R1, R2, R3, R4, R5 von Fig. 8 oder 10; R1, R2, R3, R4, R5, R6 von Fig. 11) bereitgestellt wird, und
Mittel (121, 107) zum Steuern einer Intensität (L) des Lichtstrahls; und
eine Steuerung (320), konfiguriert, um die Intensität (L) des Lichtstrahls so einzustellen, um eine erste feste Intensität (L0) für die erste Detektionsfläche (R0) zu sein, wenn der Lichtstrahl die erste Detektionsfläche (R0) bestrahlt, und um die Intensität (L) des Lichtstrahls einzustellen, um eine variierte Intensität (L1) für die Bildschreibfläche (Ri; R1 von Fig. 5; R1, R2, R3, R4, R5 von Fig. 8 oder 10; R1, R2, R3, R4, R5, R6 von Fig. 11) zu sein, welche durch ein Bildschreibstartsignal bezeichnet wird, das zu einem Zeitablauf ausgegeben wird, der von dem ersten Detektionsergebnis (DETP1) gezählt wird, das ausgegeben wird, wenn der Lichtstrahl das erste Mittel (105a, 106a) bestrahlt, um den Lichtstrahl zu detektieren;
wobei die variierte Intensität (L1) des Lichtstrahls abhängig von verschiedenen Erzeungsbedingungen eingestellt wird;
wobei die optische Schreibvorrichtung (410; 41K, 41M, 41C, 41Y) weiter Folgendes umfasst:

zweites Mittel (105b, 106b) zum Detektieren des Lichtstrahls, um ein zweites Detektionsergebnis (DETP2) zu erzeugen, das verwendet wird, um zu Bestimmen, ob der Lichtstrahl eine zweite Detektionsfläche (R2 von Fig. 5, R6 von Fig. 8 oder 10, R7 von Fig. 11) des Bildträgers (421; 42K, 42M, 42C, 42Y) bestrahlt, wobei das zweite Mittel (105b, 106b) zum Detektieren des Lichtstrahls an der anderen Seite außerhalb der Bildschreibfläche (Ri; R1 von Fig. 5; R1, R2, R3, R4, R5 von Fig. 8 oder 10; R1, R2, R3, R4, R5, R6 von Fig. 11) bereitgestellt wird;
die Steuerung (320) ist weiter konfiguriert, um die Intensität (L) des Lichtstrahls zu steuern, um eine zweite feste Intensität (L2) für die zweite Detektionsfläche (R2 von Fig. 5, R6 von Fig. 8 oder 10, R7 von Fig. 11) zu sein, wenn der Lichtstrahl die zweite Detektionsfläche (R2 von Fig. 5, R6 von Fig. 8 oder 10, R7 von Fig. 11) bestrahlt; **dadurch gekennzeichnet, dass**
die optische Schreibvorrichtung (410; 41K, 41M, 41C, 41Y) weiter konfiguriert ist, um einen Zeitablauf von einem ersten Zeitablauf zu zählen, wenn der Lichtstrahl in die erste Detektionsfläche (R0) eintritt, bis zu einem dritten Zeitablauf, wenn der Lichtstrahl in die zweite Detektionsfläche (R2 von Fig. 5, R6 von Fig. 8 oder 10, R7 von Fig.11) eintritt, um eine gezählte Zeitdauer zu erhalten, und die Steuerung (320) weiter konfiguriert ist, um die variierte Intensität (L1) des Lichtstrahls zu berechnen, wobei eine aktuelle Abtastgeschwindigkeit (Sa) verwendet wird, die von der gezählten Zeitdauer erhalten wird.

**2.** Apparat (1) nach Anspruch 1, wobei die erste feste Intensität (L0), die variierte Intensität (L1) und die zweite feste Intensität (L2) in einer Tabelle für verschiedene Betriebsarten (A bis D) gespeichert werden, wobei die Steuerung (320) weiter konfiguriert ist, um eine der Betriebsarten (A bis D) auszuwählen, abhängig von den verschiedenen Bilderzeugungsbedingungen, und wobei die Intensität (L) des Lichtstrahls für das Bildschreiben auf die variierte Intensität (L1) in Bezug auf die ausgewählte Betriebsart eingestellt wird.

**3.** Apparat (1) nach Anspruch 1 oder 2, wobei das Mittel (121, 107) zum Steuern der optischen Schreibvorrichtung (410; 41K, 41M, 41C, 41Y) weiter Folgendes umfasst:

Mittel (201) zum Antreiben einer Lichtquelle (101) des Mittels (101, 102, 103), zum Bestrahlen und Abtasten, wobei eine Referenzspannung (Vref) verwendet wird, wobei die variierte Intensität (L1) des Lichtstrahls für die Bildschreibfläche (Ri; R1 von Fig. 5; R1, R2, R3, R4, R5 von Fig. 8 oder 10; R1, R2, R3, R4, R5, R6 von Fig. 11) proportional zu der Referenzspannung (Vref) eingestellt wird.

**4.** Apparat (1) nach irgendeinem der Ansprüche 1 bis 3, wobei die erste feste Intensität (L0) und die zweite feste Intensität (L2) im Wesentlichen zueinander gleich sind.

**5.** Apparat (1) nach Anspruch 1, der weiter Folgendes umfasst:

Mittel (112) zum Erhalten eines Differenzwertes, wobei die gezählte Zeitdauer verwendet wird, die zwischen dem ersten Zeitpunkt und dem dritten Zeitpunkt basierend auf dem ersten Detektionsergebnis (DETP1) und dem zweiten Detektionsergebnis (DETP2) gezählt wird; und
Mittel (111) zum Erzeugen eines angepassten Taktsignals, wobei der Differenzwert verwendet wird, wobei der Lichtstrahl in Synchronisation mit dem angepassten Taktsignal abgestrahlt wird.

**6.** Apparat (1) nach irgendeinem der Ansprüche 1 bis 6, wobei die erste feste Intensität (L0) basierend auf optischen Charakteristika eines ersten Detektors (106a) des ersten Mittels (105a, 106a) zum Detektieren des Lichtstrahls bestimmt wird, und die zweite feste Intensität (L2) basierend auf optischen Charakteristika eines zweiten Detektors (106b) des zweiten Mittels (106a, 106b) zum Detektieren des Lichtstrahls bestimmt wird.

**7.** Apparat (1) nach Anspruch 5, wobei die Steuerung (320) konfiguriert ist, um damit zu starten, eine Schattenkorrektur nach einem zweiten Zeitablauf anzuwenden, wenn der Lichtstrahl auf die Bildschreibfläche (Ri; R1 von Fig. 5; R1, R2, R3, R4, R5 von Fig. 8 oder 10; R1, R2, R3, R4, R5, R6 von Fig. 11) trifft.

**8.** Apparat (1) nach Anspruch 7, wobei die Steuerung (320) konfiguriert ist, um das Anwenden der Schattenkorrektur vor dem dritten Zeitablauf zu stoppen.

**9.** Apparat (1) nach Anspruch 1 oder 5, wobei die gezählte Zeitdauer erhalten wird, nachdem die Steuerung die optische Schreibvorrichtung (410; 41K, 41M, 41C, 41Y) anweist, eine Bildschreiboperation zu starten.

**10.** Apparat (1) nach Anspruch 1, 5 oder 9, wobei die Steuerung (320) weiter konfiguriert ist, um eine Vergrößerungskorrektur auszuführen, wobei die gezählte Zeitdauer verwendet wird.

**11.** Verfahren zur Steuerung einer optischen Schreibvorrichtung (410; 41K, 41M, 41C, 41Y), welche einen Lichtstrahl abstrahlt, wobei das Verfahren Folgendes umfasst:

es wird eine Fläche detektiert, auf welche der Lichtstrahl abstrahlt, wobei die Fläche eine erste Detektionsfläche (R0) umfasst, eine Bildschreibfläche (Ri; R1 von Fig. 5; R1, R2, R3, R4, R5 von Fig. 8 oder 10; R1, R2, R3, R4, R5, R6 von Fig. 11), und eine zweite Detektionsfläche (R2 von Fig. 5, R6 von Fig. 8, R7 von Fig. 11), um erste und zweite Detektionsergebnisse (DETP1, DETP2) zu erzeugen, und
es wird die optische Schreibvorrichtung (410; 41K, 41M, 41C, 41Y) mit einer Referenzspannung (Vref) angetrieben, um eine Intensität des Lichtstrahls zu steuern, wobei die Referenzspannung (Vref) eingestellt wird, um ein erster fester Wert (Vref0) für die erste Detektionsfläche (R0) zu sein, wenn der Lichtstrahl die erste Detektionsfläche (R0) bestrahlt, ein variierter Wert (Vref1) für die Bildschreibfläche (Ri; R1 von Fig. 5; R1, R2, R3, R4, R5 von Fig. 8 oder 10; R1, R2, R3, R4, R5, R6 von Fig. 11) zu sein, wenn ein Bildschreibstartsignal bei einem Zeitablauf ausgegeben wird, der von dem ersten Detektionsergebnis (DETP1) gezählt wird, das ausgegeben wird, wenn der Lichtstrahl ein erstes Detektionsmittel (105a, 106a) zum Detektieren des Lichtstrahls bestrahlt, wobei das erste Detektionsmittel (105a, 106a) zum Detektieren des Lichtstrahls an einer Seite außerhalb der Bildschreibfläche (Ri; R1 von Fig. 5; R1, R2, R3, R4, R5 von Fig. 8 oder 10; R1, R2, R3, R4, R5, R6 von Fig. 11) bereitgestellt wird, und um ein zweiter fester Wert (Vref2) für die zweite Detektionsfläche (R2 von Fig. 5, R6 von Fig. 8 oder 10, R7 von Fig. 11) zu sein, wenn der Lichtstrahl die zweite Detektionsfläche (R2 von Fig. 5, R6 von Fig. 8 oder 10, R7 von Fig. 11) bestrahlt.
wobei ein zweites Detektionsmittel (105b, 106b) zum Detektieren des Lichtstrahls das zweite Detektionsergebnis (DEPT2) ausgibt, wenn der Lichtstrahl das zweite Detektionsmittel (105b, 106b) zum Detektieren des Lichtstrahls bestrahlt, und wobei das zweite Detektionsmittel (105b, 106b) an der anderen Seite außerhalb der Bildschreibfläche (Ri; R1 von Fig. 5; R1, R2, R3, R4, R5 von Fig. 8 oder 10; R1, R2, R3, R4, R5, R6 von Fig. 11) bereitgestellt wird,
wobei der variierte Wert (Vref1) der Referenzspannung (Vref) abhängig von verschiedenen Bilderzeugungsbedingungen eingestellt wird;
**dadurch gekennzeichnet, dass:**

das Verfahren weiter die folgenden Schritte umfasst:

es wird eine Zeitdauer von einem ersten Zeitablauf gezählt, wenn das erste Detektionsergebnis (DETP1) ausgegeben wird, bis zu einem dritten Zeitablauf, wenn das zweite Detektionsergebnis (DETP2) ausgegeben wird, um eine aktuelle Abtastgeschwindigkeit (Sa) zu erhalten,
wobei der variierte Wert (Vref1) der Referenzspannung (Vref) berechnet wird, indem die aktuelle Abtastgeschwindigkeit (Sa) verwendet wird.

**12.** Verfahren nach Anspruch 11, das weiter Folgendes umfasst:

es wird wenigstens entweder der erste feste Wert (Vref0), der variierte Wert (Vref1) oder der zweite feste Wert (Vref2) in einer Tabelle für unterschiedliche Betriebsarten (A bis D) gespeichert; und
es wird eine der Betriebsarten (A bis D) ausgewählt, abhängig von den verschiedenen Bilderzeugungsbedingungen,
wobei der Wert der Referenzspannung (Vref) auf den variierten Wert (Vref1) in Bezug auf die ausgewählte Betriebsart eingestellt wird.

## Revendications

**1.** Appareil de formation d'image (1), comprenant :

un support d'image (421; 42K, 42M, 42C, 42Y) ;
un lecteur d'image (500) configuré pour lire un document original en données d'image ;
un dispositif d'écriture optique (410; 41K, 41M, 41C, 41Y) configuré pour former une image latente sur une surface d'écriture d'image (Ri; R1 de la figure 5; R1, R2, R3, R4, R5 de la figure 8 ou 10; R1, R2, R3, R4, R5, R6 de la figure 11) du support d'image (421; 42K, 42M, 42C, 42Y) en fonction des données d'image, par rayonnement et balayage d'un faisceau lumineux, dans lequel le dispositif d'écriture optique comprend :

des moyens (101, 102, 103) pour faire rayonner et balayer le faisceau lumineux sur une première surface de détection (R0), la première surface d'écriture d'image et une deuxième surface de détection (R2 de la figure 5, R6 de la figure 8 ou 10, R7 de la figure 11) du support d'image (421; 42K, 42M, 42C, 42Y) ;
des premiers moyens (105a, 106a) pour détecter le faisceau lumineux pour générer un premier résultat de détection (DETP1) utilisé pour déterminer sur laquelle parmi la première surface de détection (R0) et la surface d'écriture d'image du support d'image (421; 42K, 42M, 42Y) rayonne le faisceau lumineux, dans lequel les premiers moyens (105a, 106a) pour détecter le faisceau lumineux sont disposés sur un côté à l'extérieur de la surface d'écriture d'image (Ri; R1 de la figure 5; R1, R2, R3, R4, R5 de la figure 8 ou 10; R1, R2, R3, R4, R5, R6 de la figure 11) ; et
des moyens (121, 107) pour contrôler l'intensité (L) du faisceau lumineux ; et

un contrôleur (320) configuré pour fixer l'intensité (L) du faisceau lumineux à une première intensité fixe (L0) pour la première surface de détection (R0) lorsque le faisceau lumineux rayonne sur la première surface de détection (R0), et pour fixer l'intensité (L) du faisceau lumineux à une intensité variable (L1) pour la surface d'écriture d'image (Ri; R1 de la figure 5; R1, R2, R3, R4, R5 de la figure 8 ou 10; R1, R2, R3, R4, R5, R6 de la figure 11) qui est indiquée par un signal de début d'écriture d'image délivré en sortie à un instant compté à partir du premier résultat de détection (DETP1) délivré en sortie lorsque le faisceau lumineux rayonne sur les premiers moyens (105a, 106a) pour détecter le faisceau lumineux ;
dans lequel l'intensité variable (L1) du faisceau lumineux est fixée en fonction de diverses conditions de formation d'image ;
le dispositif d'écriture optique (410; 41K, 41M, 41C, 41Y) comprend en outre :

des deuxièmes moyens (105b, 106b) pour détecter le faisceau lumineux pour générer un deuxième résultat de détection (DETP2) utilisé pour déterminer si le faisceau lumineux rayonne sur une deuxième surface de détection (R2 de la figure 5, R6 de la figure 8 ou 10, R7 de la figure 11) du support d'image (421; 42K, 42M, 42C, 42Y), dans lequel les deuxièmes moyens (105b, 106b) pour détecter le faisceau lumineux sont disposés de l'autre coté à l'extérieur de la surface d'écriture d'image (Ri; R1 de la figure 5; R1, R2, R3, R4, R5 de la figure 8 ou 10; R1, R2, R3, R4, R5, R6 de la figure 11) ;
le contrôleur (320) est configuré en outre pour contrôler l'intensité (L) du faisceau lumineux à une deuxième intensité fixe (L2) pour la deuxième surface de détection (R2 de la figure 5, R6 de la figure 8 ou 10, R7 de la figure 11) lorsque le faisceau lumineux rayonne sur la deuxième surface de détection (R2 de la figure 5, R6 de la figure 8 ou 10, R7 de la figure 11) ;
**caractérisé en ce que**
le dispositif d'écriture optique (410; 41K, 41M, 41C, 41Y) est configuré en outre pour compter une période de temps depuis le premier instant où le faisceau lumineux entre dans la première surface de détection (R0) jusqu'à un troisième instant où le faisceau lumineux entre dans la deuxième surface de détection (R2 de la figure 5, R6 de la figure 8 ou 10, R7 de la figure 11) pour obtenir une période de temps comptée, et
le contrôleur (320) est configuré en outre pour calculer l'intensité variable (L1) du faisceau lumineux en utilisant une vitesse de balayage réelle (Sa) obtenue à partir de la période de temps comptée.

**2.** Appareil (1) selon la revendication 2, dans lequel la première intensité fixe (L0), l'intensité variable (L1) et la deuxième intensité fixe (L2) sont mémorisées dans un tableau pour différents modes de fonctionnement (A à D),
dans lequel le contrôleur (320) est configuré en outre pour sélectionner l'un des modes de fonctionnement (A à D) en fonction des diverses conditions de formation d'image, et
dans lequel l'intensité (L) du faisceau lumineux pour l'écriture d'image est fixée à l'intensité variable (L1) en fonction du mode de fonctionnement sélectionné.

**3.** Appareil (1) selon la revendication 1 ou 2, dans lequel les moyens (121, 107) pour contrôler le dispositif d'écriture optique (410; 41K, 41M, 41C, 41Y) comprennent en outre :

des moyens (201) pour commander une source lumineuse (101) des moyens (101, 102, 103) pour le rayonnement et le balayage utilisant une tension de référence (Vref), dans lequel l'intensité variable (L1) du faisceau lumineux pour la surface d'écriture d'image (Ri; R1 de la figure 5; R1, R2, R3, R4, R5 de la figure 8 ou 10; R1, R2, R3, R4, R5, R6 de la figure 11) est fixée proportionnellement à la tension de référence (Vref).

**4.** Appareil (1) selon l'une quelconque des revendications 1 à 3, dans lequel la première intensité fixe (L0) et la deuxième intensité fixe (L2) sont sensiblement égales entre elles.

**5.** Appareil (1) selon la revendication 1, comprenant en outre :

des moyens (112) pour obtenir une valeur de différence en utilisant la période de temps comptée, comptée entre le premier instant et le troisième instant, basée sur le premier résultat de détection (DETP1) et le deuxième résultat de détection (DETP2) ; et
des moyens (111) pour générer un signal d'horloge réglé en utilisant la valeur de différence,
dans lequel le faisceau lumineux rayonne en synchronisation avec le signal d'horloge réglé.

**6.** Appareil (1) selon l'une quelconque des revendications 1 à 6, dans lequel la première intensité fixe (L0) est déterminée en se basant sur les caractéristiques optiques d'un premier détecteur (106a) des premiers moyens (105a, 106a) pour détecter le faisceau lumineux, et la deuxième intensité fixe (L2) est déterminée en se basant sur les caractéristiques optiques d'un deuxième détecteur (106b) des deuxièmes moyens (106a, 106b) pour détecter le faisceau lumineux.

**7.** Appareil (1) selon la revendication 5, dans lequel le contrôleur (320) est configuré pour commencer à appliquer une correction de gris après un deuxième instant lorsque le faisceau lumineux entre dans la surface d'écriture d'image (Ri; R1 de la figure 5; R1, R2, R3, R4, R5 de la figure 8 ou 10; R1, R2, R3, R4, R5, R6 de la figure 11).

**8.** Appareil (1) selon la revendication 7, dans lequel le contrôleur (320) est configuré pour arrêter d'appliquer la correction de gris avant le troisième instant.

**9.** Appareil (1) selon la revendication 1 ou 5, dans lequel la période de temps comptée est obtenue après que le contrôleur a demandé au dispositif d'écriture optique (410; 41K, 41M, 41C, 41Y) de commencer une opération d'écriture d'image.

**10.** Appareil (1) selon la revendication 1, 5 ou 9, dans lequel le contrôleur (320) est configuré en outre pour effectuer une correction d'agrandissement en utilisant la période de temps comptée.

**11.** Procédé de commande d'un dispositif d'écriture optique (410; 41K, 41M, 41C, 41Y), qui rayonne un faisceau lumineux, le procédé comprenant :

la détection d'une surface sur laquelle rayonne le faisceau lumineux, la surface comprenant une première surface de détection (R0), une surface d'écriture d'image (Ri; R1 de la figure 5; R1, R2, R3, R4, R5 de la figure 8 ou 10; R1, R2, R3, R4, R5, R6 de la figure 11) et une deuxième surface de détection (R2 de la figure 5, R6 de la figure 8 ou 10, R7 de la figure 11) pour générer des premier et deuxième résultats de détection (DETP1, DETP2) ; et
la commande du dispositif d'écriture optique (410; 41K, 41M, 41C, 41Y) avec une tension de référence (Vref) pour commander l'intensité du faisceau lumineux, dans lequel la tension de référence (Vref) est fixée à une première valeur fixe (Vref0) pour la première surface de détection (R0) lorsque le faisceau lumineux rayonne sur la première surface de détection (R0), à une valeur variable (Vref1) pour la surface d'écriture d'image (Ri; R1 de la figure 5; R1, R2, R3, R4, R5 de la figure 8 ou 10; R1, R2, R3, R4, R5, R6 de la figure 11) lorsqu'un signal de début d'écriture d'image est délivré en sortie à un instant compté à partir du premier résultat de détection (DETP1) délivré en sortie lorsque le faisceau lumineux rayonne sur des premiers moyens de détection (105a, 106a) pour détecter le faisceau lumineux, dans lequel les premiers moyens de détection (105a, 106a) pour détecter le faisceau lumineux sont disposés sur un côté à l'extérieur de la surface d'écriture d'image (Ri; R1 de la figure 5; R1, R2, R3, R4, R5 de la figure 8 ou 10; R1, R2, R3, R4, R5, R6 de la figure 11) et à une deuxième valeur fixe (Vref2) pour la deuxième surface de détection (R2 de la figure 5, R6 de la figure 8 ou 10, R7 de la figure 11) lorsque le faisceau lumineux rayonne sur la deuxième surface de détection (R2 de la figure 5, R6 de la figure 8 ou 10, R7 de la figure 11),
dans lequel des deuxièmes moyens de détection (105b, 106b) pour détecter le faisceau lumineux délivrent en sortie le deuxième résultat de détection (DETP2) lorsque le faisceau lumineux rayonne sur les deuxièmes moyens de détection (105b, 106b) pour détecter le faisceau lumineux, et dans lequel les deuxièmes moyens de détection (105b, 106b) sont disposés de l'autre côté à l'extérieur de la surface d'écriture d'image (Ri; R1 de la figure 5; R1, R2, R3, R4, R5 de la figure 8 ou 10; R1, R2, R3, R4, R5, R6 de la figure 11) ;
dans lequel la valeur variable (Vref1) de la tension de référence (Vref) est fixée en fonction de diverses conditions de formation d'image ;
**caractérisé en ce que :**

le procédé comprend en outre les étapes suivantes :

comptage d'une première période de temps à partir d'un premier instant lorsque le premier résultat de détection (DETP1) est délivré en sortie à un troisième instant lorsque le deuxième résultat de détection (DETP2) est délivré en sortie pour obtenir une vitesse de balayage réelle (Sa),
dans lequel la valeur variable (Vref1) de la tension de référence (Vref) est calculée en utilisant la vitesse de balayage réelle (Sa).

**12.** Procédé selon la revendication 11, comprenant en outre :

l'enregistrement dans un tableau au moins d'une valeur parmi la première valeur fixe (Vref0), la valeur variable (Vref1) et la deuxième valeur fixe (Vref2) pour différents modes de fonctionnement (A à D) ; et
la sélection de l'un des modes de fonctionnement (A à D) en fonction des diverses conditions de formation d'image,
dans lequel la valeur de la tension de référence (Vref) est fixée à la valeur variable (Vref1) en fonction du mode de fonctionnement sélectionné.

FIG. 1

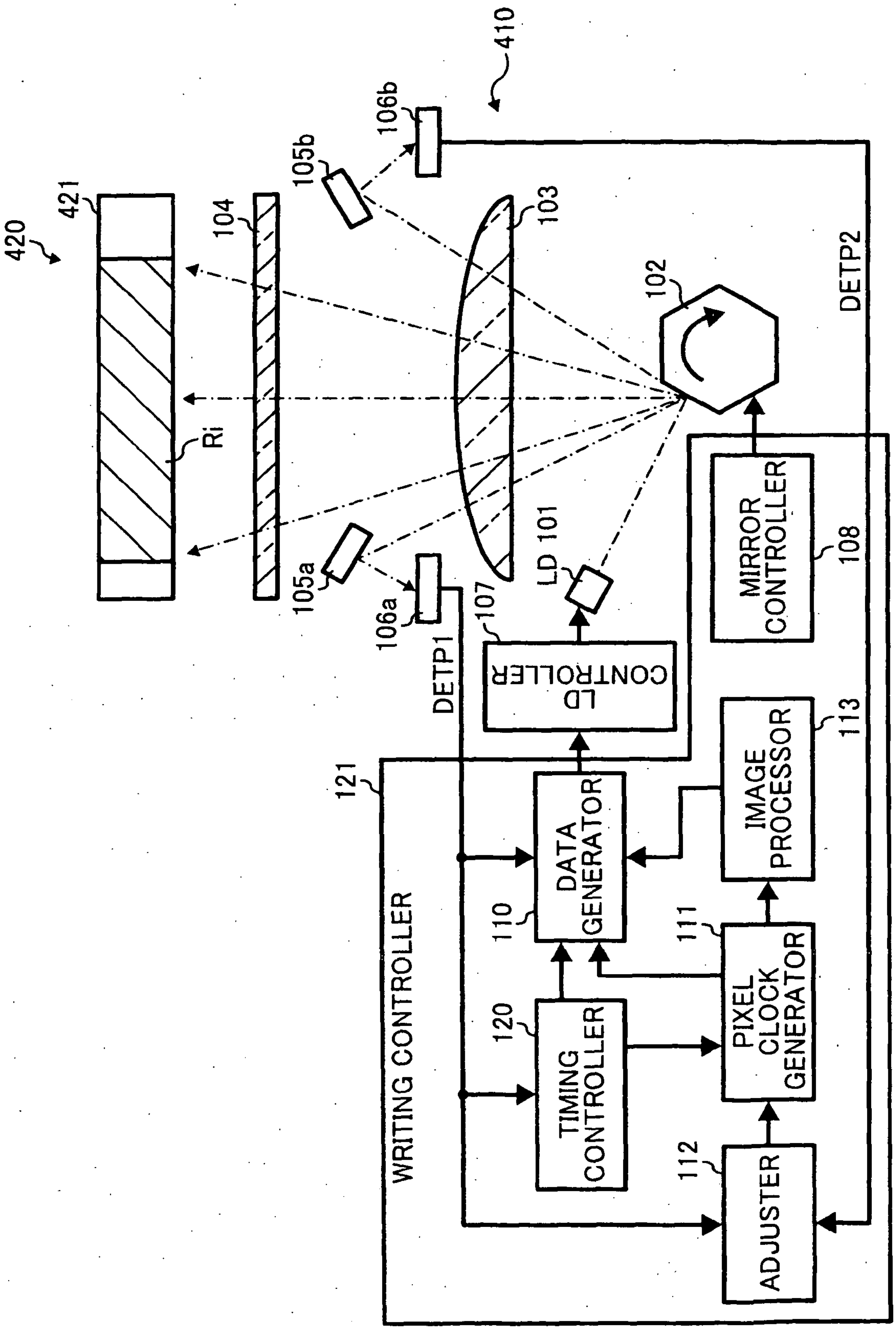
410
420
421
104
105b
106b
103
102
Ri
DETP2
105a
106a
LD 101
107
DETP1
LD CONTROLLER
MIRROR CONTROLLER
108
121
WRITING CONTROLLER
DATA GENERATOR
110
IMAGE PROCESSOR
113
111
PIXEL CLOCK GENERATOR
120
TIMING CONTROLLER
112
ADJUSTER

FIG. 2

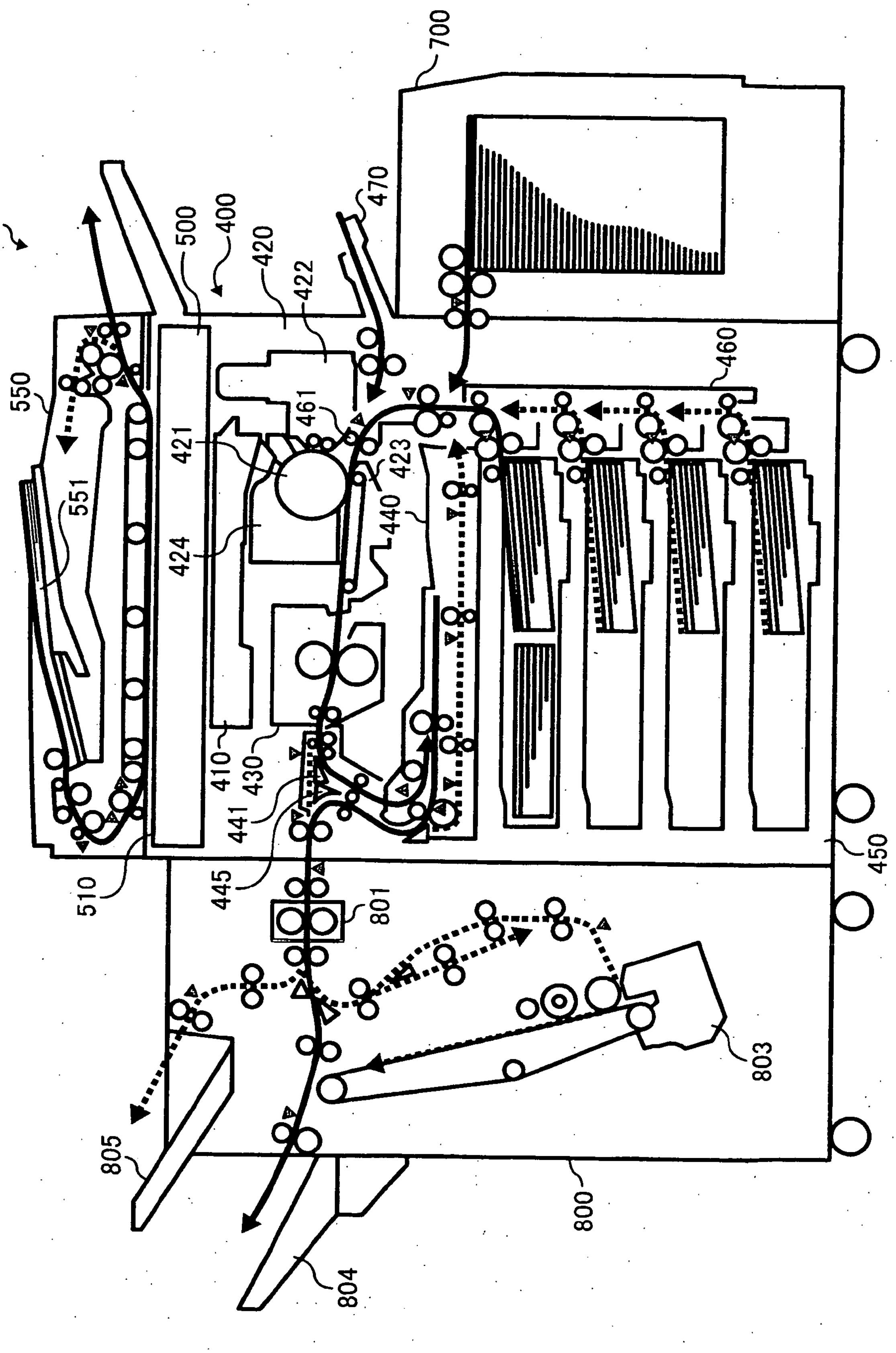
1
700
470
500
400
420
422
460
550
461
421
423
551
440
424
410
430
441
445
510
450
801
803
805
800
804

FIG. 3

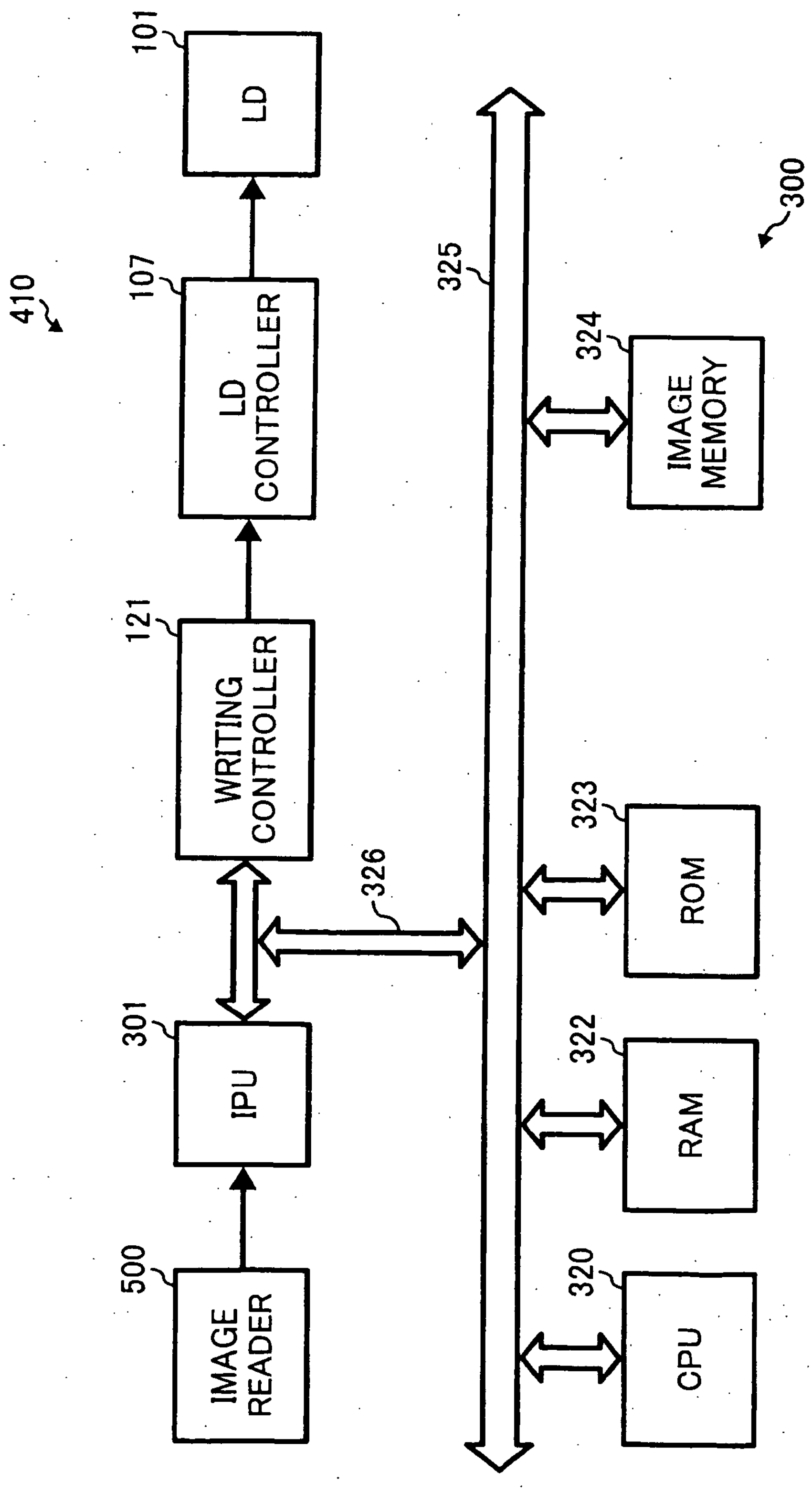
410
IMAGE READER
IPU
WRITING CONTROLLER
LD CONTROLLER
LD
500
301
121
107
101
326
325
CPU
RAM
ROM
IMAGE MEMORY
320
322
323
324
300

FIG. 4

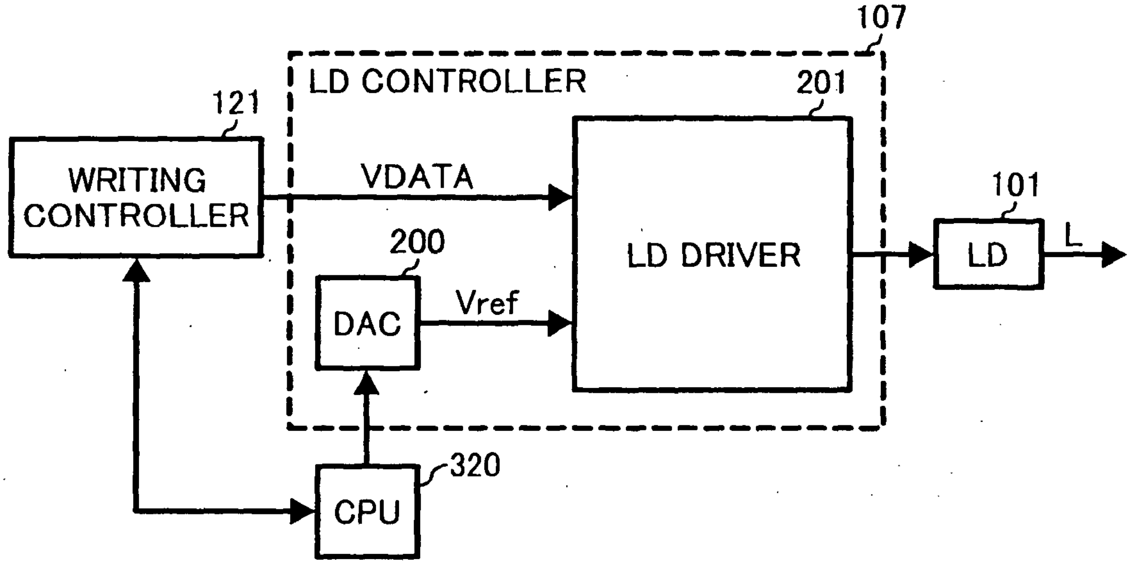
107
LD CONTROLLER
201
121
WRITING CONTROLLER
VDATA
101
200
LD DRIVER
LD
L
DAC
Vref
320
CPU

FIG. 5

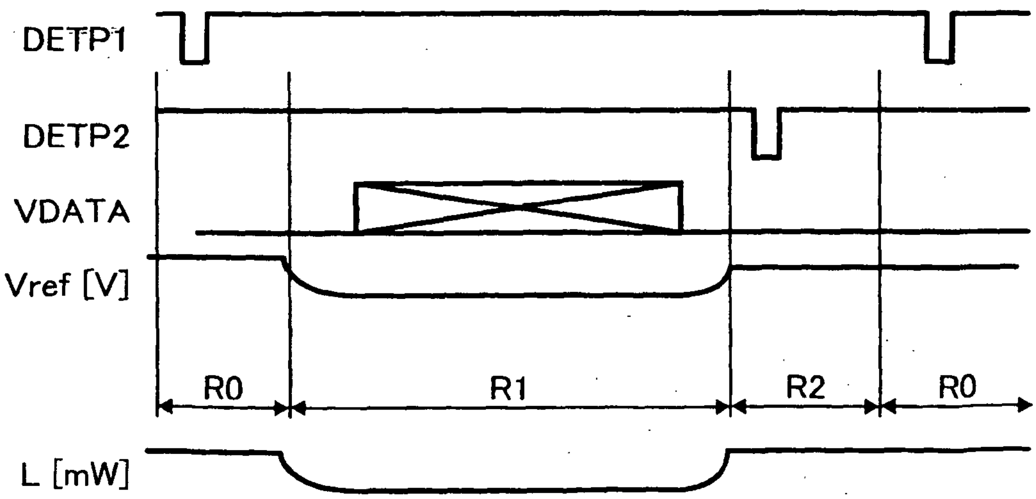
DETP1
DETP2
VDATA
Vref [V]
R0
R1
R2
R0
L [mW]

FIG. 6

| | L1 [mW] | L0 [mW] | L2 [mW] | Vref 0 [h] | Vref 1 [h] | Vref 2 [h] |
|---|---|---|---|---|---|---|
| MODE A | 0.160 | 0.144 | 0.144 | 90 | A0 | 90 |
| MODE B | 0.128 | 0.144 | 0.144 | 90 | 80 | 90 |
| MODE C | 0.112 | 0.144 | 0.144 | 90 | 70 | 90 |
| MODE D | 0.960 | 0.144 | 0.144 | 90 | 60 | 90 |

FIG. 7

| TABLE NO. | Vref 0 [h] | Vref 2 [h] |
|---|---|---|
| 0 | B8 | B8 |
| 1 | B0 | B0 |
| 2 | A8 | A8 |
| 3 | A0 | A0 |
| 4 | 98 | 98 |
| 5 | 90 | 90 |
| 6 | 88 | 88 |
| 7 | 80 | 80 |
| 8 | 78 | 78 |
| 9 | 70 | 70 |
| 10 | 68 | 68 |

FIG. 8

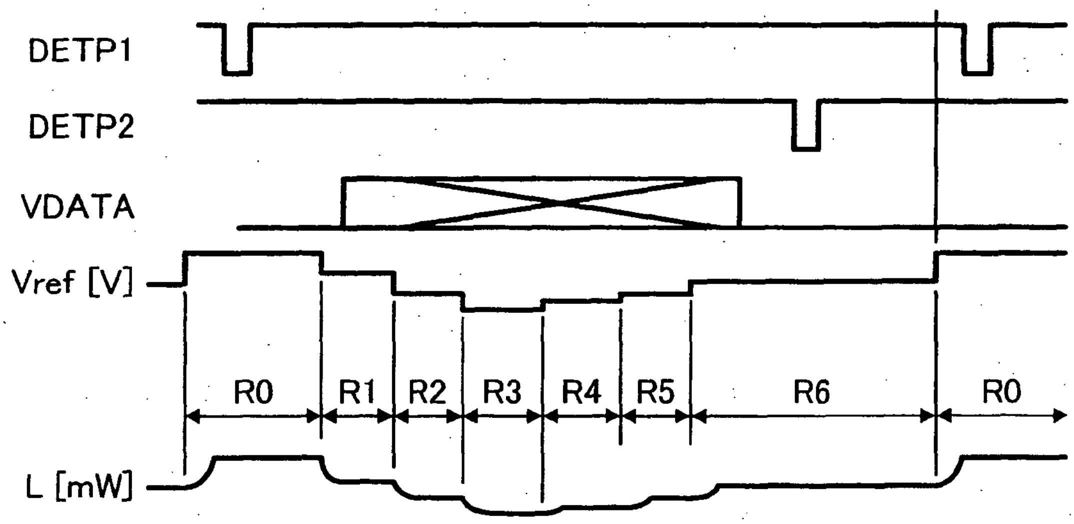
DETP1
DETP2
VDATA
Vref [V]
R0
R1
R2
R3
R4
R5
R6
R0
L [mW]

FIG. 9

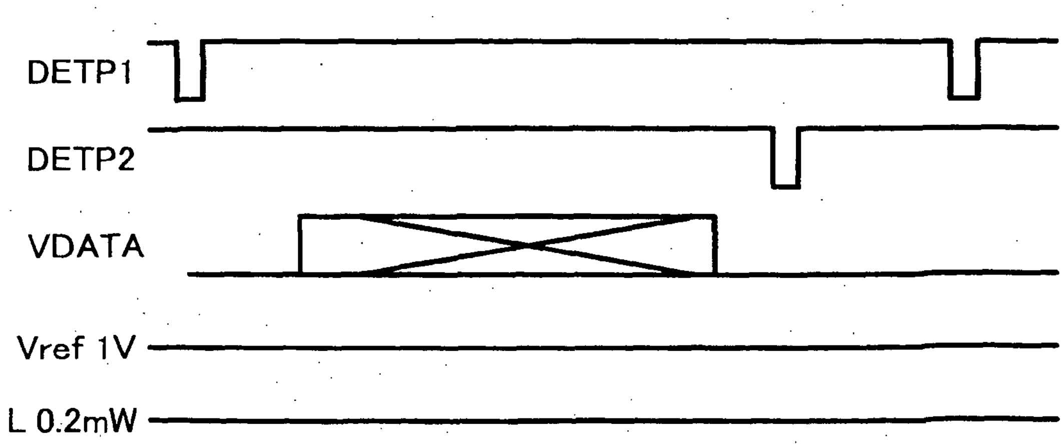
DETP1
DETP2
VDATA
Vref 1V
L 0.2mW

FIG. 10

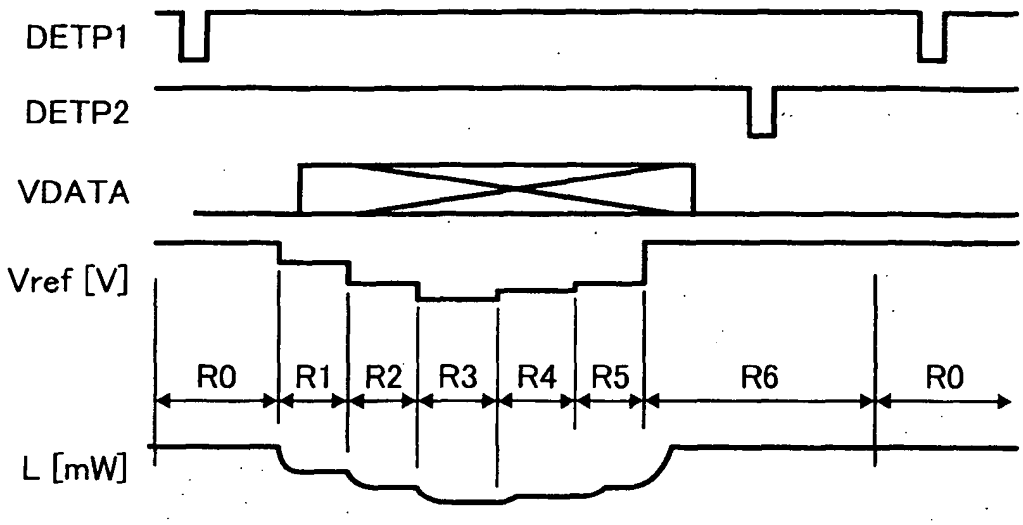
DETP1
DETP2
VDATA
Vref [V]
R0
R1
R2
R3
R4
R5
R6
R0
L [mW]

FIG. 11

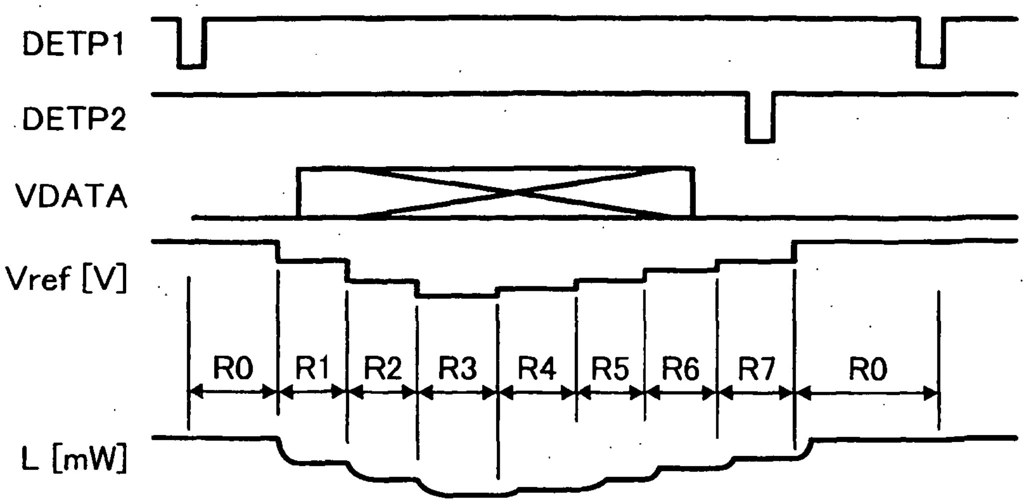
DETP1
DETP2
VDATA
Vref [V]
R0
R1
R2
R3
R4
R5
R6
R7
R0
L [mW]

FIG. 12

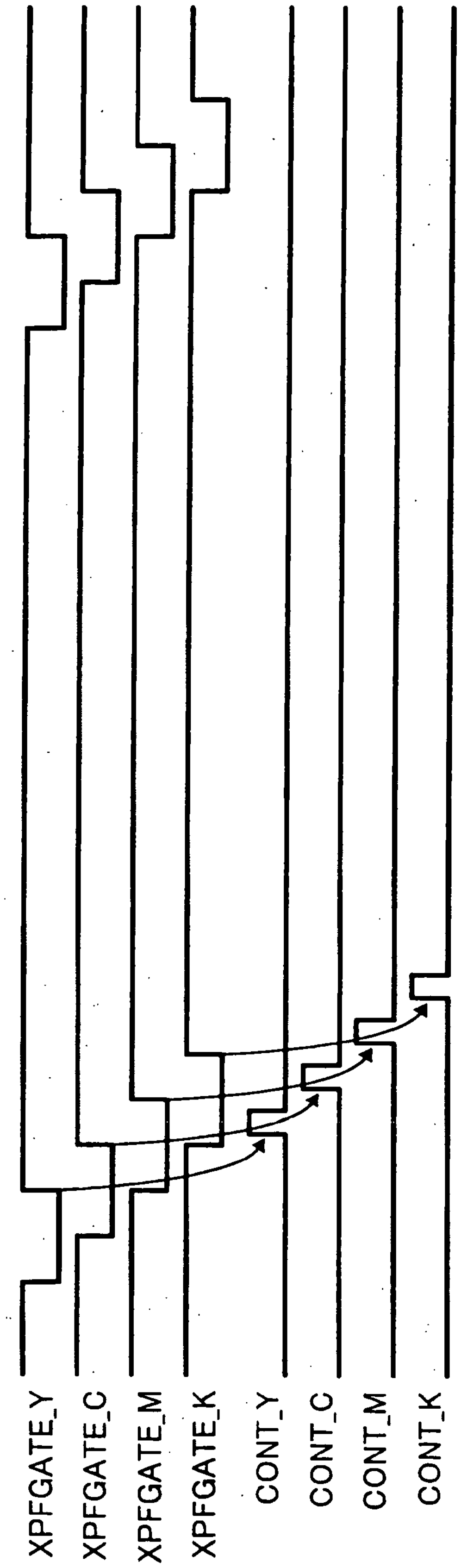
XPFGATE_Y
XPFGATE_C
XPFGATE_M
XPFGATE_K
CONT_Y
CONT_C
CONT_M
CONT_K

FIG. 13

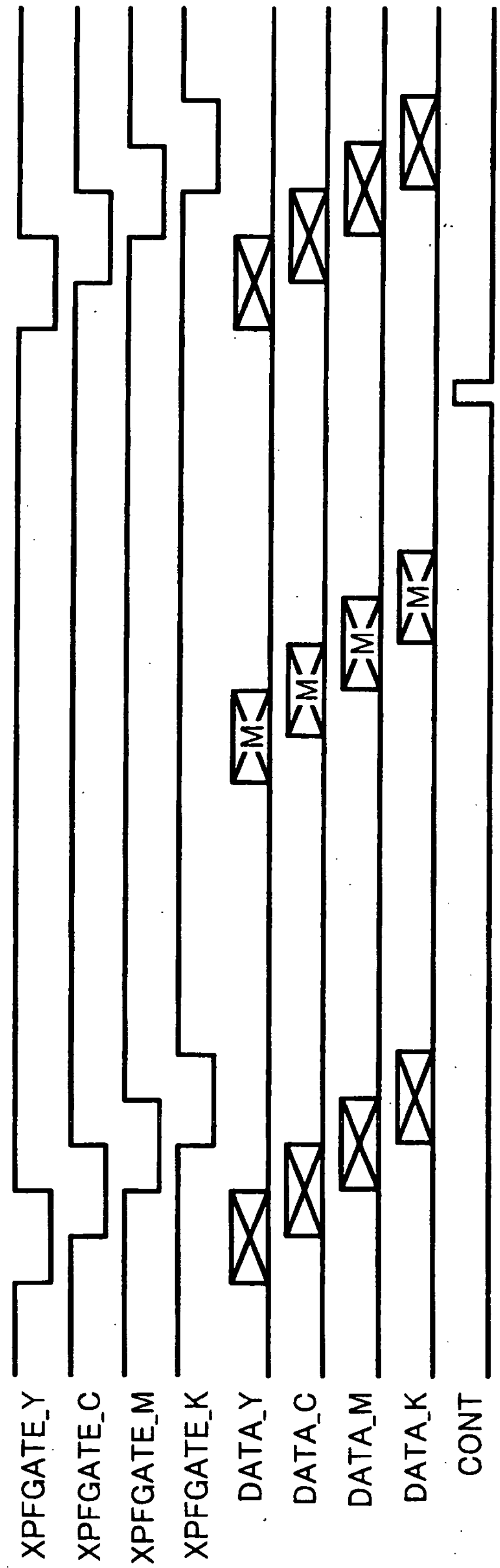
XPFGATE_Y
XPFGATE_C
XPFGATE_M
XPFGATE_K
DATA_Y
DATA_C
DATA_M
DATA_K
CONT
M
M
M
M

FIG. 14

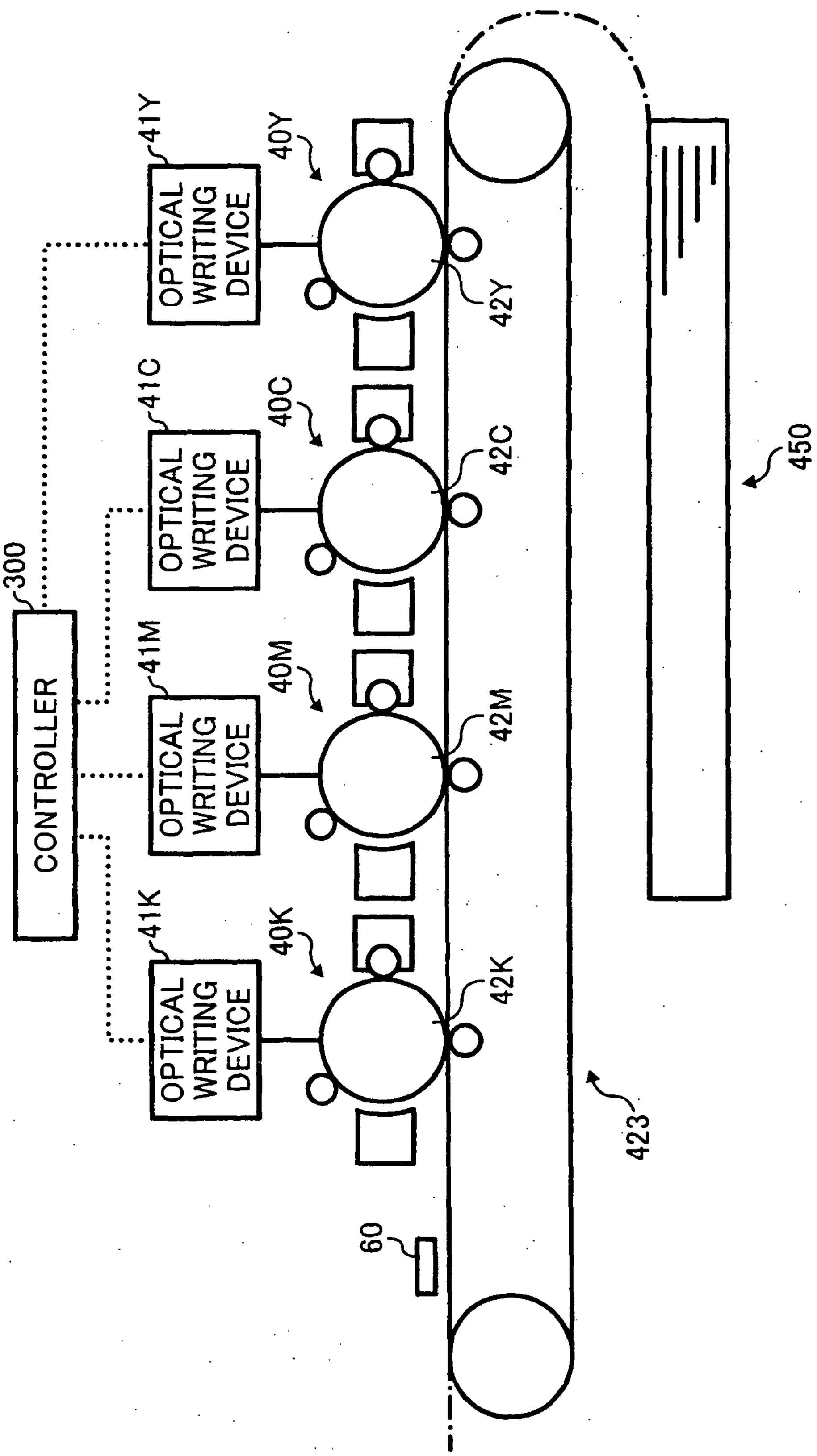
300
CONTROLLER
41Y
OPTICAL WRITING DEVICE
41C
OPTICAL WRITING DEVICE
41M
OPTICAL WRITING DEVICE
41K
OPTICAL WRITING DEVICE
40Y
40C
40M
40K
42Y
42C
42M
42K
60
423
450

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6847390 B
- JP 2005007697 A
- JP 2005208071 A
- JP 2005088531 A
- JP 5096778 A
- JP 5204230 A